# EUROPÄISCHE PATENTSCHRIFT

(11) **EP 3 668 132 B1**
(45) Veröffentlichungstag und Bekanntmachung des Hinweises auf die Patenterteilung: **04.08.2021**
(21) Anmeldenummer: 19020686.2
(22) Anmeldetag: 10.12.2019
(51) Int. Cl.: H04W 8/24, G06F 8/65, G06F 8/658

(54) **INKREMENTELLES AKTUALISIEREN EINER FIRMWARE**
INCREMENTAL UPDATING OF A FIRMWARE
MISE À JOUR INCRÉMENTIELLE D'UN MICROLOGICIEL

(30) Priorität: 14.12.2018 DE 102018009835
(43) Veröffentlichungstag der Anmeldung: 17.06.2020
(73) Patentinhaber: Giesecke+Devrient Mobile Security GmbH, 81677 München (DE)
(72) Erfinder: Jarnik, Claus, 86949 Windach (DE)

(56) Entgegenhaltungen:
- EP-A1- 2 448 215
- WO-A1-03/009136
- DE-A1- 19 543 843
- DE-A1-102016 201 361
- DE-T2- 69 912 601
- US-A1- 2017 171 742

## Beschreibung

Die vorliegende Erfindung ist auf ein Verfahren zum effizienten und inkrementellen Verteilen von mehrstufigen Aktualisierungspaketen gerichtet, wobei es erfindungsgemäß möglich ist, unterschiedliche Versionen von Aktualisierungsdaten effizient einzuspielen und hierbei Abhängigkeiten zwischen den einzelnen Versionen zu berücksichtigen. Die vorliegende Erfindung ist ebenso gerichtet auf eine Systemanordnung, welche dem Verfahren analog ausgestaltet ist, sowie auf ein Computerprogrammprodukt mit Steuerbefehlen, welche das vorgeschlagene Verfahren implementieren bzw. die vorgeschlagene Systemanordnung betreiben.

DE 69912601 T2 zeigt ein Verfahren zum inkrementellen Updaten einer Datei mit einem ausführbaren Code.

US 2017 0171742 A1 zeigt ein Verfahren zum Dateisystemanagement, insbesondere auf einer sogenannten embedded Universal Integrated Circuit Card.

WO 2018/ 021897 A1 zeigt ein elektronisches Gerät, aufweisend eine eUICC, worauf mehrere Profile installiert sind.

EP 2 448 215 A1 beschreibt ein Verfahren und eine Vorrichtung zur sicheren Modifikation, Speicherung und Ausführung von Einheiten zur Zugriffssteuerung im Bereich der mobilen Kommunikationsnetze.

DE 10 2016 201361 A1 beschreibt eine Technik zum Verwalten von Firmware-Updates für integrierte Komponenten, wie z.B. eingebettete universelle integrierte Schaltungen, sogenannte eUICC, die konfiguriert sind zum Verwalten von elektronischen Teilnehmeridentitätsmodulen, z.B. eSIM, innerhalb von mobilen Vorrichtungen.

DE 195 43 843 A1 beschreibt ein Verfahren zur Aktualisierung von Software eine Mobiltelefons durch ein System eines Mobilfunkanbieters.

WO 03/009136 A1 beschreibt ein Verfahren zum Aktualisieren von eingebetteten Betriebssystemen mittels Softwarepatches, nachdem ein Gerät mit dem Betriebssystem ausgeliefert wurde.

Generell ist es bekannt, unterschiedliche Aktualisierungsroutinen auszuführen, wobei jedoch zwischen den einzelnen Versionen von Steuerbefehlen Abhängigkeiten bestehen, so dass es nicht möglich ist, einen Sprung von einem Update zu einem nächsten auszuführen, falls Zwischenversionen erforderlich sind. Folglich ist es aus dem Stand der Technik bekannt, dass ein inkrementelles Update bzw. Aktualisieren ausgeführt werden muss. Der Stand der Technik bezieht sich jedoch im Wesentlichen auf Computernetzwerke, welche nicht vergleichbar sind mit mobilen Endgeräten, welche Sicherheitselemente aufweisen. So unterscheiden sich die vorgeschlagenen Sicherheitselemente bzw. mobilen Endgeräte dadurch, dass diese über geringe Rechenkapazitäten verfügen, und folglich sind diverse Verfahren aus dem Stand der Technik nicht auf Sicherheitselemente zu übertragen.

Gemäß dem Stand der Technik sind sogenannte SIM-Karten bekannt, welche entweder in ein mobiles Endgerät fest integriert werden oder aber auch wechselbar eingesteckt werden können. Wechselbare SIM-Karten werden auch als Universal Integrated Circuit Card UICC bezeichnet, wobei einstückig ausgeformte Endgeräte mit eingebetteter SIM-Karte, also einer embedded Universal Integrated Circuit Card eUICC, in immer mehr Anwendungsszenarien Einsatz finden. Eines dieser Anwendungsszenario ist das sogenannte Internet of Things, bei dem Alltagsgegenstände mit einer Datenschnittstelle ausgestattet werden. Derartige Endgeräte benötigen ein Betriebssystem bzw. eine Firmware, welche auch entsprechend aktualisiert werden muss.

eUICCs können generische Firmware Update (FWU) Pakete, mit mehreren Firmware Update Images (FWUI) in einem Paket, empfangen und daraus die notwendigen Teile selbstständig extrahieren und einspielen.

Der Stand der Technik für Firmware Update fähige eUICCs zeigt beispielhafte Konfigurationen (die auf eUICCs geladen werden):
1. Basisplattform
2. Basisplattform + Feature A
3. Basisplattform + Feature B
4. Basisplattform + Feature A und Feature B

Für alle im Feld vorhandenen INIs/ Konfigurationen müssen eigene Firmware Update Pakete erstellt und jeweils entsprechend der eUICC Konfigurationen verteilt werden. D.h. für die obigen vier aufgelisteten Konfigurationen müssten vier verschiedene, eigene Pakete erstellt werden. Diese Update Pakete müssen zu den einzelnen Firmware Ständen passen.

Ein typischer FWU Bundle Transfer: Update Server- eUICC, gemäß dem Stand der Technik verläuft wie folgt:
- Das FWU Bundle wird als komplettes Paket von einem FW Update Server an ein Handset/ Device übertragen
- Handset/ Device speichert das komplette FWU Bundle in einem geeigneten Speicher, bis das Update erfolgreich durchgeführt wurde
- Handset/ Device teilt das Gesamtpaket transparent in kleinere, für die eUICC passende, Blöcke und sendet diese über eine I/O Schnittstelle an die eUICC
- eUICC sammelt bzw. verarbeitet die einzelnen Datenpakete

Die Update Server müssen die einzelnen Pakete jeweils an die korrekte eUICC verteilen und dabei den genauen, aktuellen Firmware Stand kennen. Jedes Paket muss genau auf Firmware Stand und vorhandene Features auf dem eUICC angepasst sein.

Gerade bei eingebetteten SIM-Karten, sogenannten eUICC, ist es im Stand der Technik nachteilig, dass zwar generell Aktualisierungen mittels einer Luftschnittstelle, also Over The Air OTA, ausgeführt werden können, diese berücksichtigen aber keinerlei Abhängigkeiten zwischen den einzelnen Versionen, und somit besteht ein Bedarf an einem Verfahren, welches speziell für Sicherheitselemente ein inkrementelles Aktualisieren vorschlägt. So haben bekannte Verfahren den Nachteil, dass auf der einen Seite eine hohe Bandbreite erforderlich ist, um entsprechende Daten zu übertragen, und auf der anderen Seite ist zudem der Speicherplatz typischerweise stark begrenzt, so dass gerade bei inkrementellen Aktualisierungen ein besonders speichereffizientes Verfahren notwendig ist.

Die bekannten Verfahren sind sehr aufwändig, da ein Updateserver die einzelnen Endgeräte mitsamt derer Betriebssystemversion kennen muss. Hierzu müssen einzelne Aktualisierungsdateien ausgestellt werden und diese über ein Netzwerk verteilt werden. Hierdurch entsteht ein erheblicher Rechenaufwand, da sich die einzelnen Sicherheitselemente bezüglich ihrer Bauart, dem Betriebssystem und der installierten Version unterscheiden können.

Folglich ist es eine Aufgabe der vorliegenden Erfindung, ein verbessertes Verfahren zum effizienten und inkrementellen Verteilen von mehrstufigen Aktualisierungspaketen vorzuschlagen, welches speziell auf die Bedürfnisse von Sicherheitselementen zugeschnitten sein soll und darüber hinaus wenig Aufwand verursacht. Insbesondere ist es eine Aufgabe der vorliegenden Erfindung, ein Verfahren vorzuschlagen, welches besonders effizient bezüglich Speicherbedarf und Rechenleistung ist. Ferner ist es eine Aufgabe der vorliegenden Erfindung, eine entsprechend eingerichtete Systemanordnung vorzuschlagen sowie ein Computerprogrammprodukt mit Steuerbefehlen, welche das vorgeschlagene Verfahren implementieren bzw. die vorgeschlagene Systemanordnung betreiben.

Die Aufgabe wird gelöst mit den Merkmalen der unabhängigen Patentansprüche. Weitere vorteilhafte Ausgestaltungen sind in den Unteransprüchen angegeben.

Demgemäß wird ein Verfahren zum effizienten und inkrementellen Verteilen von mehrstufigen Aktualisierungspaketen an ein Sicherheitselement eines mobilen Endgeräts vorgeschlagen, aufweisend ein Bereitstellen des Aktualisierungspakets, wobei das Aktualisierungspaket mehrere, aufeinander aufbauende Gruppen von Steuerbefehlen umfasst, wobei ein Zuweisen eines Identifikators an jede der Gruppen von Steuerbefehlen und ein Vorgeben einer Aktualisierungsreihenfolge der Gruppen von Steuerbefehlen anhand des zugewiesenen Identifikators und ein iteratives Übersenden des Aktualisierungspakets an das Sicherheitselement durch das mobile Endgerät, wobei in jeder Iteration mindestens eine Gruppe von Steuerbefehlen auf dem Sicherheitselement in Abhängigkeit der vorgegebenen Aktualisierungsreihenfolge installiert wird und das Aktualisierungspaket angepasst wird, vorgesehen ist.

Das vorgeschlagene Verfahren ist effizient, da es zwar generell möglich ist, dass stets erneut ein komplettes Aktualisierungspaket übermittelt wird, bevorzugt ist jedoch vorgesehen, dass das Aktualisierungspaket in jeder Iteration angepasst wird, derart, dass der Umfang abnimmt. So umfasst das Aktualisierungspaket unterschiedliche Gruppen von Steuerbefehlen, und sobald eine Gruppe von Steuerbefehlen installiert ist, muss diese nicht neu in dem Aktualisierungspaket vorhanden sein. Folglich werden nur diejenigen Gruppen von Steuerbefehlen übermittelt, die tatsächlich auch zur Aktualisierung benötigt werden.

Bei einem inkrementellen Verteilen handelt es sich um ein Übermitteln von Gruppen von Steuerbefehlen, wobei eine Gesamtheit einer Aktualisierung aus mehreren Einzelschritten besteht und für jeden Einzelschritt eine eigene Gruppe von Steuerbefehlen vorgesehen ist. Wird beispielsweise eine Firmware in der Version 1 zu der Version 5 aktualisiert, so ist es typischerweise der Fall, dass nicht ein einzelnes Update von der Version 1 auf die Version 5 möglich ist, sondern vielmehr müssen inkrementell unterschiedliche Gruppen von Steuerbefehlen vorgehalten werden, derart, dass von Version 1, auf 2, auf 3, auf 4 und letztendlich auf 5 upgegradet bzw. aktualisiert werden kann.

Erfindungsgemäß wird also das Problem behandelt, dass aufeinander aufbauende Gruppen von Steuerbefehlen zu übermitteln sind, wobei der Stand der Technik jeweils lediglich einzelne Aktualisierungen vorsieht. Erfindungsgemäß werden Synergien zwischen den einzelnen Gruppen von Steuerbefehlen genutzt und es muss nicht jedes Mal komplett eine neue Aktualisierungsdatei vollständig übermittelt werden. Vielmehr wird erfindungsgemäß zwischen den einzelnen Gruppen von Steuerbefehlen unterschieden, und es wird eine Reihenfolge spezifiziert, in der die Gruppen von Steuerbefehlen zu installieren sind.

Somit wird also ein mehrstufiges Aktualisierungspaket vorgeschlagen, welches auf ein Sicherheitselement aufgespielt werden soll. Das mobile Endgerät umfasst hierbei das Sicherheitselement und übernimmt die Datenkommunikation, derart, dass das Sicherheitselement als eine Zielplattform vorliegt, welches von dem mobilen Endgerät mit entsprechenden Aktualisierungsdaten versorgt wird.

Das mobile Endgerät liegt typischerweise als ein Mobiltelefon vor, wobei auch weitere Formate erfindungsgemäß abgedeckt werden. So kann das mobile Endgerät insbesondere als ein Gegenstand aus dem sogenannten Internet of Things vorliegen, oder es handelt sich um einen Tablet Computer. Darüber hinaus ist es bekannt, in Notebooks entsprechende Sicherheitselemente einzubauen. Bevorzugt liegt das Sicherheitselement als eine sogenannte embedded Universal Integrated Circuit Card eUICC vor.

Erfindungsgemäß ist es vorgesehen, das Aktualisierungspaket bereitzustellen, wobei das Aktualisierungspaket mehrere, aufeinander aufbauende Gruppen von Steuerbefehlen umfasst, die jeweils auch als ein Upgrade bezeichnet werden können. So ist es vorgesehen, dass eine Gruppe von Steuerbefehlen von einer ersten Version auf eine zweite Version aktualisiert wird, und hierzu sind die Steuerbefehle vorgesehen, die Aktualisierungsdaten bereitstellen bzw. eine Firmware schaffen. Folglich bauen die Gruppen aufeinander auf und es entsteht eine Hierarchie, wobei zuerst eine erste Gruppe von Steuerbefehlen zu installieren ist und sodann eine darauffolgende, zweite Gruppe von Steuerbefehlen.

Erfindungsgemäß werden die Aktualisierungspakete derart semantisch angereichert, dass den einzelnen Gruppen jeweils ein Identifikator zugewiesen wird, der die Gruppen jeweils voneinander unterscheidet. Typischerweise kann es sich hierbei um einen fortlaufenden, numerischen Identifikator handeln.

Dieser numerische Indikator kann beispielsweise die Aktualisierungsreihenfolge anzeigen, wobei durch die Identifikatoren und die Aktualisierungsreihenfolge mindestens eine verkettete Liste entsteht. So kann eine erste Gruppe von Steuerbefehlen einen Identifikator 1 aufweisen und zudem einen Zeiger aufweisen, der auf die zweite Gruppe von Steuerbefehlen zeigt. Die zweite Gruppe von Steuerbefehlen hat also den Identifikator 2 und kann zusätzlich einen Zeiger aufweisen, der auf eine Gruppe 3 von Steuerbefehlen zeigt. Auf diese Weise entsteht eine Aktualisierungsreihenfolge, welche generell linear aufgebaut ist.

Insgesamt können auch mehrere Aktualisierungsreihenfolgen derart bestehen, dass beispielsweise bei einem Upgrade von Version 1 auf Version 4 lediglich die Versionen 2 oder 3 vorgehalten werden müssen. So kann es insgesamt generell möglich sein, dass einzelne Versionen übersprungen werden können, und somit ist es möglich, von der Version 1 auf die Version 2 und sodann auf die Version 4 zu aktualisieren, oder aber auch von der Version 1 auf die Version 3 und sodann auf die Version 4 zu aktualisieren. Da die Version 2 oder die Version 3 installiert sein muss, um eine Version 4 zu installieren, entstehen mehrere Pfade, die erfindungsgemäß berücksichtigt werden müssen. In diesem Beispiel ist es also nicht notwendig, dass erst beide Versionen 2 und 3 eingespielt werden müssen, sondern durch die beiden Alternativen sind eben auch zwei mögliche Aktualisierungsreihenfolgen vorzusehen.

Sodann erfolgt ein iteratives Übersenden des Aktualisierungspakets an das Sicherheitselement durch das mobile Endgerät, wobei das Sicherheitselement mindestens eine Gruppe von Steuerbefehlen installiert und vorzugsweise alle verfügbaren Gruppen von Steuerbefehlen installiert. Hierzu ist stets die Aktualisierungsreihenfolge einzuhalten, sodass lediglich kompatible Versionen aufeinanderfolgen. Das Sicherheitselement erkennt also anhand der übermittelten Metainformationen, welche Gruppe von Steuerbefehlen zu installieren ist, und insbesondere, in welcher Reihenfolge die Gruppen zu installieren sind.

Es kann hierbei das Problem auftreten, dass das Sicherheitselement aufgrund des eingeschränkten Speicherplatzes nicht in der Lage ist, alle Gruppen von Steuerbefehlen abzuspeichern, also nicht das ganze Aktualisierungspaket. In diesem Fall installiert das Sicherheitselement mindestens eine Gruppe von Steuerbefehlen, ohne jedoch die weiteren Gruppen abzuspeichern. Diese weiteren Gruppen können wiederum auf dem mobilen Endgerät ausgelagert werden, und folglich installiert das Sicherheitselement lediglich so viele Gruppen von Steuerbefehlen, wie Speicherplatz vorhanden ist.

Sodann kann abgeprüft werden, welche Gruppen von Steuerbefehlen tatsächlich notwendig sind, und nicht-notwendige Gruppen können verworfen werden. Ist hierbei jedoch die Aktualisierungsreihenfolge nicht vollständig abgearbeitet, so ist es notwendig, dass das mobile Endgerät das Aktualisierungspaket erzeugt anpasst und sodann diejenigen Gruppen von Steuerbefehlen in das Aktualisierungspaket abspeichert, welche für das Sicherheitselement notwendig sind. Dies hat insbesondere den Vorteil, dass nicht alle Gruppen von Steuerbefehlen gleichzeitig in das Aktualisierungspaket eingefügt werden müssen, sondern vielmehr werden erfindungsgemäß lediglich diejenigen Gruppen von Steuerbefehlen eingefügt, welche also tatsächlich auch benötigt werden. Somit ist also eine Auswahl zu treffen, und primär sind dem Sicherheitselement relevante Gruppen von Steuerbefehlen anzubieten. Anhand der Aktualisierungsreihenfolge kann sodann entschieden werden, welche Gruppe von Steuerbefehlen bzw. welche Gruppen von Steuerbefehlen zu installieren sind, und demgemäß kann auch das Aktualisierungspaket letztendlich angepasst werden.

Das Aktualisierungspaket wird in angepasster Form also wieder von dem mobilen Endgerät an das Sicherheitselement bereitgestellt, was generell iterativ erfolgen kann. Somit erfolgt also stets ein iteratives Übersenden des Aktualisierungspakets, ein Installieren und in Abhängigkeit der installierten Gruppen von Steuerbefehlen wird sodann das Aktualisierungspaket angepasst und erneut geschickt. Folglich wird also ein inkrementelles Verteilen von Gruppen von Steuerbefehlen durchgeführt, derart, dass ein mehrstufiges Aktualisierungspaket letztendlich angewendet wird.

Gemäß einem Aspekt der vorliegenden Erfindung spezifiziert die Aktualisierungsreihenfolge mindestens eine verkettete Liste von Gruppen von Steuerbefehlen. Dies hat den Vorteil, dass eine oder mehrere lineare Abfolgen von Gruppen von Aktualisierungsbefehlen bzw. Steuerbefehlen geschaffen werden kann. Die Aktualisierungsreihenfolge weist generell einer ersten Gruppe von Steuerbefehlen eine zweite, nachfolgende Gruppe von Steuerbefehlen zu. Wie bereits geschildert, gibt es Situationen, in der die Aktualisierungsreihenfolge vorsieht, dass jeweils zwei Vorgängerversionen einer Gruppe möglich sind, und somit entstehen mehrere verkettete Listen. Ist bezüglich einer Aktualisierung von einer Version 1 auf eine Version 4 vorgesehen, dass sowohl die Versionen 2 und 3 als Vorgängerversion dienen können, so kann angenommen werden, dass zwei Pfade möglich sind, die von Version zu Version 4 führen, und somit entstehen eben auch zwei verkettete Listen.

Gemäß einem weiteren Aspekt der vorliegenden Erfindung wird das iterative Übersenden des Aktualisierungspakets so lange ausgeführt, bis alle Gruppen der Steuerbefehle aus der vorgegebenen Aktualisierungsreihenfolge installiert sind. Dies hat den Vorteil, dass ein klares Abbruchkriterium definiert wird und die Aktualisierungsreihenfolge somit festlegt, wann das vorliegende Verfahren terminiert.

Gemäß einem weiteren Aspekt der vorliegenden Erfindung wird in jeder Iteration mindestens eine Auswahl aus den Gruppen von Steuerbefehlen auf dem Sicherheitselement installiert. Dies hat den Vorteil, dass mindestens die nächste Gruppe von Steuerbefehlen installiert wird, wobei es generell auch möglich ist, bereits weitere Gruppen von Steuerbefehlen zu installieren. Die Anzahl der zu installierenden Gruppen von Steuerbefehlen kann beispielsweise in Abhängigkeit eines verfügbaren Speicherplatzes auf dem Sicherheitselement gewählt werden. Generell ist es bevorzugt, dass alle vorgesehenen Gruppen von Steuerbefehlen in der Aktualisierungsreihenfolge installiert werden, was aufgrund der beschränkten Hardwareressourcen jedoch oftmals nicht möglich ist. Somit wird das iterative Verfahren angestoßen und es wird in jeder Iteration eine möglichst große Anzahl an Gruppen von Steuerbefehlen installiert.

Gemäß einem weiteren Aspekt der vorliegenden Erfindung sieht die Aktualisierungsreihenfolge mehrere alternative Reihenfolgen von Gruppen vor. Dies hat den Vorteil, dass unterschiedliche Pfade spezifiziert werden können, und somit kann überprüft werden, welche Aktualisierungsreihenfolge die vorteilhafteste ist. So können unterschiedliche Parameter berücksichtigt werden, und falls mehrere Aktualisierungsreihenfolgen möglich sind, kann die vorteilhafteste ausgewählt werden.

Gemäß einem weiteren Aspekt der vorliegenden Erfindung wird jede Gruppe von Steuerbefehlen in Abhängigkeit eines verfügbaren Speicherplatzes auf dem Sicherheitselement installiert. Dies hat den Vorteil, dass die Gruppen, welche in dem Aktualisierungspaket übermittelt werden, lediglich dann installiert werden, wenn genug Speicherplatz auf dem Sicherheitselement vorhanden ist. Ist ausreichend Speicherplatz vorhanden, so kann in jeder Iteration auch vorgesehen werden, dass zwei Gruppen von Steuerbefehlen oder auch mehrere Gruppen installiert werden. Das vorgeschlagene Vorgehen sieht vor, dass der Speicherplatz des Sicherheitselements dynamisch ausgelesen wird und sodann entschieden wird, welche Gruppen von Steuerbefehlen zu installieren sind.

Gemäß einem weiteren Aspekt der vorliegenden Erfindung werden Gruppen von Steuerbefehlen, welche nicht installiert werden, auf das mobile Endgerät ausgelagert. Dies hat den Vorteil, dass die nicht-verwendeten Gruppen weiterhin vorgehalten werden, und lediglich falls Bedarf besteht, an das Sicherheitselement übermittelt werden. Folglich ist es nicht notwendig, dass diese Gruppen von Steuerbefehlen verworfen werden, sondern vielmehr werden diese zu einem späteren Zeitpunkt übermittelt.

Gemäß einem weiteren Aspekt der vorliegenden Erfindung wird die Aktualisierungsreihenfolge dynamisch in Abhängigkeit einer abgespeicherten Kompatibilitätsinformation erstellt. Dies hat den Vorteil, dass zur Laufzeit die Gruppen von Steuerbefehlen analysiert werden können, und sodann kann festgestellt werden, welche Gruppen bzw. Versionen zueinander kompatibel sind. Folglich kann dynamisch eine Aktualisierungsreihenfolge gefunden werden, welche sicherstellt, dass die einzelnen Gruppen von Steuerbefehlen tatsächlich aufeinander aufbauen können, und folglich werden diese dann letztendlich auch in dieser Reihenfolge installiert.

Gemäß einem weiteren Aspekt der vorliegenden Erfindung ist das Aktualisierungspaket derart angepasst, dass die installierte Gruppe von Steuerbefehlen nicht mehr in dem Aktualisierungspaket enthalten ist. Dies hat den Vorteil, dass nicht mehr benötigte Daten auch aus dem Aktualisierungspaket gelöscht werden, und folglich wird in weiteren Iterationen ein Aktualisierungspaket angeboten, welches einen geringen Speicherumfang aufweist. Somit wird also Datenverkehr eingespart.

Gemäß einem weiteren Aspekt der vorliegenden Erfindung wird das Aktualisierungspaket derart angepasst, dass dieses nur Gruppen von Steuerbefehlen umfasst, welche in der Aktualisierungsreihenfolge spezifiziert sind. Dies hat den Vorteil, dass nur relevante Gruppen von Steuerbefehlen vorgehalten werden, und somit können generische Aktualisierungspakete dahingehend in ihrem Umfang verringert werden, dass nicht-benötigte Gruppen von Steuerbefehlen aus dem Aktualisierungspaket gelöscht werden. Folglich ist es erfindungsgemäß auch möglich, generische Aktualisierungspakete zu verwenden und diese dann erfindungsgemäß besonders vorteilhaft anzupassen.

Gemäß einem weiteren Aspekt der vorliegenden Erfindung werden die eingebetteten Steuerbefehle als Firmware bereitgestellt. Dies hat den Vorteil, dass eine Software aktualisiert werden kann, die in das elektronische Gerät eingebettet ist. Hierzu können sogenannte Flash-Speicher oder Read-only-Memories verwendet werden. Eine Firmware ist stets funktional fest mit der Hardware verbunden, weshalb ein technischer Beitrag geleistet wird, selbst wenn eine computerimplementierte Erfindung vorgeschlagen wird. Das vorgeschlagene Verfahren kann beispielsweise als Netzwerkprotokoll zumindest teilweise implementiert werden.

Gemäß einem Aspekt der vorliegenden Erfindung wird das Sicherheitselement als eine Universal Integrated Circuit Card UICC oder eine embedded Universal Integrated Circuit Card eUICC bereitgestellt. Dies hat den Vorteil, dass vorhandene Schnittstellen wiederverwendet werden können und insbesondere dass mobile Endgeräte aus dem Anwendungsszenario des Internet of Things verwendet werden können. Solche Endgeräte des Internet of Things verfügen typischerweise über entsprechende Sicherheitselemente, sodass keine weiteren Datenspeicher bzw. Prozessoren notwendig sind. Ein weiteres mögliches mobiles Endgerät ist ein Smartphone, wobei die vorliegende Erfindung bevorzugt nicht als Smartphone implementiert wird. Erfindungsgemäß ist es besonders vorteilhaft, dass Endgeräte aus dem Anwendungsszenario Internet of Things in großer Zahl vorliegen und es insbesondere unterschiedliche Hardwareplattformen und Softwareplattformen gibt. Folglich ist der technische Beitrag gerade in diesem Anwendungsbereich besonders vorteilhaft, da ein effizientes Verteilen eingebetteter Steuerbefehle erfolgt und die Effizienz gerade bei einer Vielzahl von mobilen Endgeräten zum Tragen kommt.

Die Aufgabe wird auch gelöst durch ein Aktualisierungspaket zur Verwendung in einem Verfahren nach einem der vorhergehenden Ansprüche.

Die Aufgabe wird auch gelöst durch eine Systemanordnung zum effizienten und inkrementellen Verteilen von mehrstufigen Aktualisierungspaketen an ein Sicherheitselement eines mobilen Endgeräts, aufweisend einen Datenspeicher eingerichtet zum Bereitstellen des Aktualisierungspakets, wobei das Aktualisierungspaket mehrere, aufeinander aufbauende Gruppen von Steuerbefehlen umfasst, wobei eine Steuerungseinheit eingerichtet zum Zuweisen eines Identifikators an jede der Gruppen von Steuerbefehlen und ein Vorgeben einer Aktualisierungsreihenfolge der Gruppen von Steuerbefehlen anhand des zugewiesenen Identifikators und eine Aktualisierungseinheit eingerichtet zum iterativen Übersenden des Aktualisierungspakets an das Sicherheitselement durch das mobile Endgerät, wobei in jeder Iteration mindestens eine Gruppe von Steuerbefehlen auf dem Sicherheitselement in Abhängigkeit der vorgegebenen Aktualisierungsreihenfolge installiert wird und das Aktualisierungspaket angepasst wird, vorgesehen ist.

Die Aufgabe wird auch gelöst durch ein Computerprogrammprodukt mit Steuerbefehlen, welche das vorgeschlagene Verfahren implementieren bzw. die vorgeschlagene Systemanordnung betreiben. Darüber hinaus können die Steuerbefehle das Aktualisierungspaket bereitstellen.

Erfindungsgemäß ist es besonders vorteilhaft, dass das Verfahren Verfahrensschritte aufweist, welche funktionale Aspekte liefern, die so auch von der Aktualisierungsanordnung nachgebaut werden können. Somit umfasst die Aktualisierungsanordnung strukturelle Merkmale, welche eine Funktionalität bereitstellen, die den einzelnen Verfahrensschritten entspricht.

Weitere vorteilhafte Ausgestaltungen werden anhand der beigefügten Figuren näher erläutert. Es zeigen:
- Fig. 1:: eine Übersicht über ein Aktualisierungspaket mitsamt entsprechender Konfigurationsdaten gemäß einem Aspekt der vorliegenden Erfindung;
- Fig. 2:: ein plattformspezifisch gesichertes Image bzw. ein Aktualisierungspaket gemäß einem Aspekt der vorliegenden Erfindung; und
- Fig. 3:: ein schematisches Ablaufdiagramm des vorgeschlagenen Verfahrens zum effizienten und inkrementellen Verteilen von mehrstufigen Aktualisierungspaketen gemäß einem weiteren Aspekt der vorliegenden Erfindung.

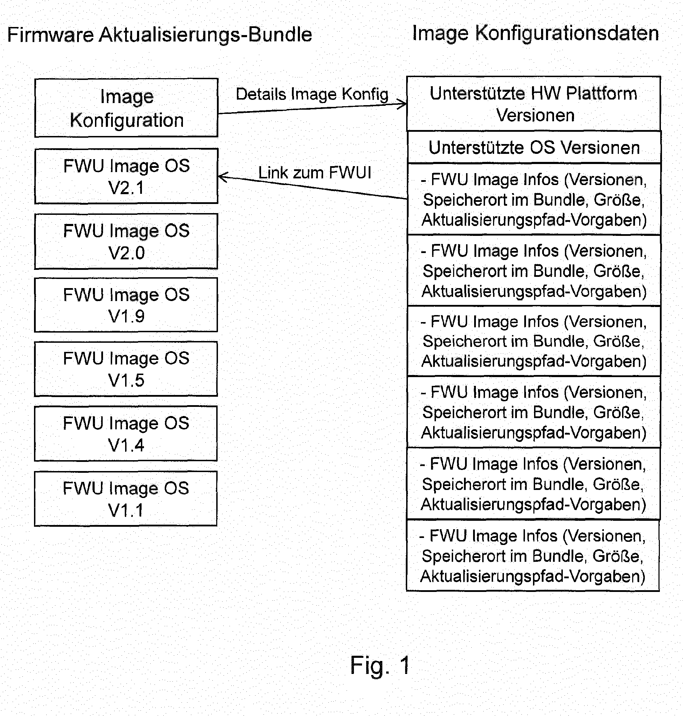

Fig. 1 zeigt auf der linken Seite ein Aktualisierungspaket, welches die einzelnen Gruppen von Steuerbefehlen aufweist. Diese werden generell als Image bezeichnet und stellen Aktualisierungsbefehle bzw. Parameter bereit. Auf der rechten Seite in der vorliegenden Fig. 1 ist eine Konfigurationsdatei eingezeichnet, welche sowohl die Aktualisierungsreihenfolge implizit darstellt sowie die Identifikatoren. Die Identifikatoren können als Versionsnummer vorliegen, und es wird eine Vorgabe bezüglich eines Aktualisierungspfads angegeben. So kann eine Aktualisierungspfadvorgabe darin bestehen, dass für eine Version V2.1 eine Vorgängerversion V2.0 erforderlich ist, und für eine Version V2.0 eine der Versionen V1.5 - V1.9. Darüber hinaus kann die Version V1.5 eine der Versionen V1.0 - V1.4 benötigen. Somit wird also spezifiziert, welche Vorgängerversion für die aktuelle Version von Steuerbefehlen verfügbar sein muss.

eUICCs (bzw. iUICCs) können generische Firmware Update (FWU) Pakete, mit mehreren Firmware Update Images (FWUI) in einem Bundle, empfangen und daraus die notwendigen Teile selbstständig extrahieren und einspielen. Diese Ziel-Plattform (eUICC/iUICC) erkennt notwendige Update Pfade, die in einem solchen Bundle enthalten sind und kann mit einem Handset/ Terminal optimierte Updateschritte auf die neueste Version durchführen.

Mittels eines bekannten Verfahrens kann aus einem Update Bundle einfach eine geeignete, kompatible Update Version erkannt und geladen werden.

Allerdings gibt es auch die Möglichkeit, dass in einem Bundle mehrere, auf sich aufbauende Versionen vorhanden sind, für die inkrementelle Updateschritte notwendig sind.

D.h. inkrementelle Updates müssen durchgeführt werden, um die neueste Version aus dem Bundle laden zu können. So sind z.B. in einem Bundle die Versionen V1.1, V1.4, V1.5, V1.9, V2.0 und V2.1 vorhanden und es gelten folgende Kompatibilitätsanforderungen:
V2.1 kann nur auf eine Plattform mit V2.0 geladen werden
V2.0 kann nur auf eine Plattform mit mindestens V1.5 geladen werden
V1.5 kann auf eine Plattform V1.0 bis V1.4 geladen werden.

Soll eine Plattform mit V1.0 den neuesten Stand V2.1 erhalten, so müssen mehrere Updateschritte durchgeführt werden (V1.0 -> V1.5 -> V2.0 -> V2.1). Die Schwierigkeit hierbei ist, dass der Speicher einer Ziel-Plattform limitiert sein kann, nicht alle notwendigen Update Pakete zwischengespeichert werden können und die Updatepfade so schnell und komfortabel wie möglich durchgeführt werden sollen.

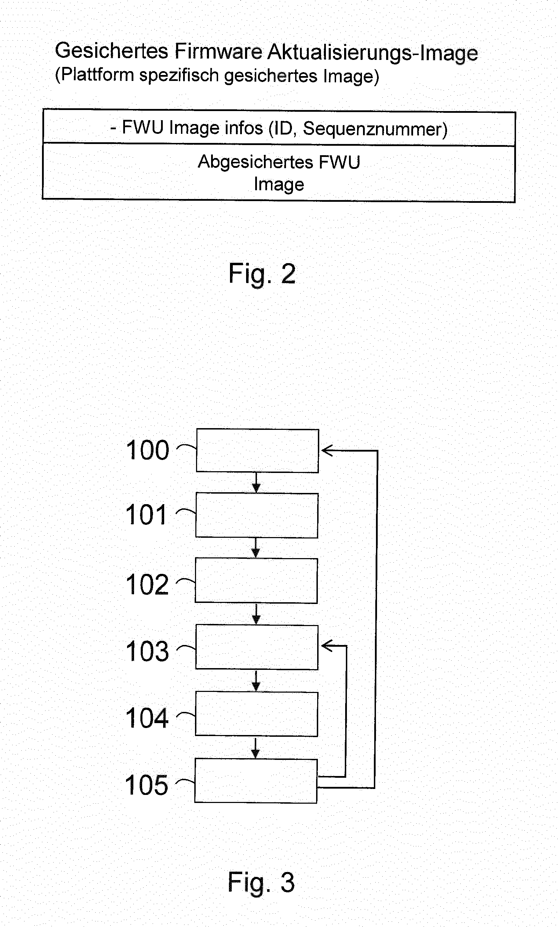

Fig. 2 zeigt ein Aktualisierungsimage, wobei eine verkettete Liste dadurch erstellt werden kann, dass ein Identifikator ID bereitgestellt werden kann und darüber hinaus eine Sequenznummer bereitgestellt wird. Somit lässt sich eine verkettete Liste aufbauen, wobei von einem Identifikator zu einem nächsten Identifikator gezeigt wird. Darunter ist das abgesicherte Image eingezeichnet.

Fig. 3 zeigt in einem schematischen Ablaufdiagramm ein Verfahren zum effizienten und inkrementellen Verteilen von mehrstufigen Aktualisierungspaketen an ein Sicherheitselement eines mobilen Endgeräts, aufweisend ein Bereitstellen 100 des Aktualisierungspakets, wobei das Aktualisierungspaket mehrere, aufeinander aufbauende Gruppen von Steuerbefehlen umfasst, wobei ein Zuweisen 101 eines Identifikators an jede der Gruppen von Steuerbefehlen und ein Vorgeben 102 einer Aktualisierungsreihenfolge der Gruppen von Steuerbefehlen anhand des zugewiesenen Identifikators und ein iteratives Übersenden 103 des Aktualisierungspakets an das Sicherheitselement durch das mobile Endgerät, wobei in jeder Iteration mindestens eine Gruppe von Steuerbefehlen auf dem Sicherheitselement in Abhängigkeit der vorgegebenen Aktualisierungsreihenfolge installiert 104 wird, und das Aktualisierungspaket angepasst 105 wird, vorgesehen ist.

Der Fachmann erkennt hierbei, dass die einzelnen Schritte iterativ ausgeführt werden können und/ oder Unterschritte aufweisen können.

Das Handset/ Terminal informiert die Ziel-Plattform gemäß einem Aspekt der vorliegenden Erfindung am Anfang der Update Prozedur, wie bzw. ob inkrementelle Updates von Handset/ Terminal unterstützt werden.

Gemäß einem Aspekt der vorliegenden Erfindung bestehen folgende mögliche Handset/ Terminal Optionen:
- Das gesamte FW Update Bundle wird von Handset/ Terminal bei Bedarf so lange wiederholt an die Ziel-Plattform gesendet, bis alle vorhandenen Updateschritte durchgeführt wurden. Dies ermöglich eine einfache Implementierung in einem Handset/ Terminal und auf der Ziel-Plattform.
- Das Handset/ Terminal kann von einer Ziel-Plattform zurück gesendete Datenblöcke zwischenspeichern und später erneut zusenden. Dies ermöglich es, optimierte Updatepfade durchzuführen, da nur notwendige Blöcke an das Handset/ Terminal für die spätere Verwendung ausgelagert werden. Für das obige Beispiel mit den Update Pfaden bedeutet dies, dass aus einem Bundle mit 6 Versionen maximal drei Versionen ausgelagert werden.

Verfügt die Ziel-Plattform über ausreichend freien Speicher, können auch weniger Versionen ausgelagert werden bzw. im Idealfall alles intern gespeichert und verwaltet werden.

Ergänzend werden alle möglichen Update Pfade von der aktuellen zur neuesten Version ermittelt. Hierbei ist für jede enthaltenen Version die Information zu den kompatiblen Vorgängerversionen enthalten, siehe obige Kompatibilitätsanforderungen.

Anschließend wird gemäß einem Aspekt der vorliegenden Erfindung ermittelt, ob sämtliche Updatepakete zwischengespeichert werden können. Sofern nicht alle Updatepakete zwischengespeichert werden können, wird die entsprechende Handset/ Terminal Option verwendet. D.h. entweder wird das Bundle so lange wiederholt gesendet, bis alle Updatepfade durchgeführt wurden, oder es werden die nicht speicherbaren Versionen ausgelagert. Die Auslagerung funktioniert auf eine gesicherte Art und Weise. Dazu werden die auszulagernden Versionen kryptographisch gesichert und zusammen mit einer Verwaltungsinformation (ID, Sequence Number) an das Handset/ Terminal transferiert.

Die Sicherung erfolgt gemäß einem Aspekt der vorliegenden Erfindung mit nur der Ziel-Plattform bekannten Schlüsseln (z.B. ein Schlüssel zur Verschlüsselung, ein Schlüssel für eine kryptographischen Checksumme).

Am Ende eines erfolgreichen Update Schrittes teilt die Plattform dem Handset/ Terminal die weiteren Schritte mit, sofern keine intern gespeicherten Updates vorhanden sind. Entweder soll das gesamte Bundle wiederholt gesendet werden, oder es wird über die Verwaltungsinformation (ID/ Sequence Number) die nächste Update Version angefordert. Diese Schritte werden so lange durchgeführt, bis die aktuellste Version installiert wurde.

Die Ziel-Plattform erkennt eigenständig die in einem Bundle vorhandenen Update Pfade und wenn möglich, speichert die Ziel-Plattform alle notwendigen Images für die inkrementelle Installationen.

Wenn möglich, speichert die Ziel-Plattform so viele Images, wie in den vorhandenen Speicher passen. Passen nicht alle notwendigen Images in den vorhandenen Speicher, so werden, falls vom Handset/ Terminal unterstützt, die notwendigen Images kryptographisch neu gesichert und an das Handset/ Terminal transferiert. Diese Images enthalten Informationen für spätere Updates: eine ID und eine Sequence Number (Reihenfolge, falls mehrere Images geliefert werden sollen) sowie das neu gesicherte Image. D.h. dieses Image kann nur von dieser Ziel-Plattform verarbeitet werden.

Falls das Handset/ Terminal diese Auslagerung nicht unterstützt, so gibt es die Möglichkeit, das ursprüngliche Bundle so lange an die Karte zu senden, bis alle Update Pfade durchlaufen wurden.

Somit können auf unterschiedlichen Wegen Update Pfade/ inkrementelle Updates automatisch und entsprechend der Ressourcen möglichst schnell durchgeführt werden. Es wird immer automatisch die performanteste und schnellste Lösung ausgewählt.

## Patentansprüche

1. Verfahren zum effizienten und inkrementellen Verteilen von mehrstufigen Aktualisierungspaketen an ein Sicherheitselement eines mobilen Endgeräts, aufweisend:
- ein Bereitstellen (100) des Aktualisierungspakets durch das mobile Endgerät, wobei das Aktualisierungspaket mehrere, aufeinander aufbauende Gruppen von Steuerbefehlen umfasst, **dadurch gekennzeichnet, dass**
- ein Zuweisen (101) eines Identifikators an jede der Gruppen von Steuerbefehlen und ein Vorgeben (102) einer Aktualisierungsreihenfolge der Gruppen von Steuerbefehlen anhand des zugewiesenen Identifikators durch das Sicherheitselement; und
- ein iteratives Übersenden (103) des Aktualisierungspakets an das Sicherheitselement durch das mobile Endgerät, wobei in jeder Iteration mindestens eine Gruppe von Steuerbefehlen auf dem Sicherheitselement in Abhängigkeit der vorgegebenen Aktualisierungsreihenfolge installiert (104) wird und das Aktualisierungspaket angepasst (105) wird, sodass die installierte Gruppe von Steuerbefehlen nicht mehr in dem Aktualisierungspaket enthalten ist, vorgesehen ist.

2. Verfahren nach Anspruch 1, **dadurch gekennzeichnet, dass** die Aktualisierungsreihenfolge mindestens eine verkettete Liste von Gruppen von Steuerbefehlen spezifiziert.

3. Verfahren nach Anspruch 1 oder 2, **dadurch gekennzeichnet, dass** das iterative Übersenden (103) des Aktualisierungspakets so lange ausgeführt wird, bis alle Gruppen der Steuerbefehle aus der vorgegebenen (102) Aktualisierungsreihenfolge installiert (104) sind.

4. Verfahren nach einem der vorhergehenden Ansprüche, **dadurch gekennzeichnet, dass** in jeder Iteration mindestens eine Auswahl aus den Gruppen von Steuerbefehlen auf dem Sicherheitselement installiert (104) wird.

5. Verfahren nach einem der vorhergehenden Ansprüche, **dadurch gekennzeichnet, dass** die Aktualisierungsreihenfolge mehrere alternative Reihenfolgen von Gruppen vorsieht.

6. Verfahren nach einem der vorhergehenden Ansprüche, **dadurch gekennzeichnet, dass** jede Gruppe von Steuerbefehlen in Abhängigkeit eines verfügbaren Speicherplatzes auf dem Sicherheitselement installiert (104) wird.

7. Verfahren nach einem der vorhergehenden Ansprüche, **dadurch gekennzeichnet, dass** Gruppen von Steuerbefehlen, welche nicht installiert werden, auf das mobile Endgerät ausgelagert werden.

8. Verfahren nach einem der vorhergehenden Ansprüche, **dadurch gekennzeichnet, dass** die Aktualisierungsreihenfolge dynamisch in Abhängigkeit einer abgespeicherten Kompatibilitätsinformation erstellt wird.

9. Verfahren nach einem der vorhergehenden Ansprüche, **dadurch gekennzeichnet, dass** das Aktualisierungspaket derart angepasst (105) wird, dass die installierte (104) Gruppe von Steuerbefehlen nicht mehr in dem Aktualisierungspaket enthalten ist.

10. Verfahren nach einem der vorhergehenden Ansprüche, **dadurch gekennzeichnet, dass** das Aktualisierungspaket derart angepasst (105) wird, dass dieses nur Gruppen von Steuerbefehlen umfasst, welche in der Aktualisierungsreihenfolge spezifiziert sind.

11. Verfahren nach einem der vorhergehenden Ansprüche, **dadurch gekennzeichnet, dass** die Steuerbefehle eine Firmware bereitstellen.

12. Verfahren nach einem der vorhergehenden Ansprüche, **dadurch gekennzeichnet, dass** das Sicherheitselement als eine Universal Integrated Circuit Card UICC oder eine embedded Universal Integrated Circuit Card eUICC bereitgestellt wird.

13. Aktualisierungspaket zur Verwendung in einem Verfahren nach einem der vorhergehenden Ansprüche.

14. Systemanordnung zum effizienten und inkrementellen Verteilen von mehrstufigen Aktualisierungspaketen an ein Sicherheitselement eines mobilen Endgeräts, aufweisend:
- einen Datenspeicher eingerichtet zum Bereitstellen (100) des Aktualisierungspakets, wobei das Aktualisierungspaket mehrere, aufeinander aufbauende Gruppen von Steuerbefehlen umfasst, **dadurch gekennzeichnet, dass**
- eine Steuerungseinheit eingerichtet zum Zuweisen (101) eines Identifikators an jede der Gruppen von Steuerbefehlen und ein Vorgeben (102) einer Aktualisierungsreihenfolge der Gruppen von Steuerbefehlen anhand des zugewiesenen Identifikators; und
- eine Aktualisierungseinheit eingerichtet zum iterativen Übersenden (103) des Aktualisierungspakets an das Sicherheitselement durch das mobile Endgerät, wobei in jeder Iteration mindestens eine Gruppe von Steuerbefehlen auf dem Sicherheitselement in Abhängigkeit der vorgegebenen Aktualisierungsreihenfolge installiert (104) wird und das Aktualisierungspaket angepasst (105) wird, sodass die installierte Gruppe von Steuerbefehlen nicht mehr in dem Aktualisierungspaket enthalten ist, vorgesehen ist.

15. Computerprogrammprodukt mit Steuerbefehlen, welche das Verfahren gemäß einem der Ansprüche 1 bis 12 ausführen, wenn sie auf der Systemanordnung des Anspruchs 14 zur Ausführung gebracht werden.

## Claims

1. A method for efficiently and incrementally distributing multi-stage update packets to a security element of a mobile end device, comprising:
- a supplying (100) of the update packet by the mobile end device, wherein the update packet comprises several successive groups of control commands, **characterized in that**
- an assigning (101) of an identifier to each of the groups of control commands and a specifying (102) of an update sequence of the groups of control commands based on the assigned identifier by the security element; and
- an iterative transmitting (103) of the update packet to the security element by the mobile end device, wherein in each iteration it is provided that at least one group of control commands is installed (104) on the security element in dependence on the predetermined update sequence and the update packet is adapted (105) so that the installed group of control commands is no longer contained in the update packet.

2. The method according to claim 1, **characterized in that** the update sequence specifies at least one concatenated list of groups of control commands.

3. The method according to claim 1 or 2, **characterized in that** the iterative transmitting (103) of the update packet is carried out until all groups of the control commands from the predetermined (102) update sequence are installed (104).

4. The method according to any of the preceding claims, **characterized in that** in each iteration at least one selection from the groups of control commands is installed (104) on the security element.

5. The method according to any of the preceding claims, **characterized in that** the update sequence provides several alternative sequences of groups.

6. The method according to any of the preceding claims, **characterized in that** each group of control commands is installed (104) on the security element in dependence on an available memory space.

7. The method according to any of the preceding claims, **characterized in that** groups of control commands which are not going to be installed are outsourced to the mobile end device.

8. The method according to any of the preceding claims, **characterized in that** the update sequence is created dynamically in dependence on a stored compatibility information.

9. The method according to any of the preceding claims, **characterized in that** the update packet is adapted (105) such that the installed (104) group of control commands is no longer contained in the update packet.

10. The method according to any of the preceding claims, **characterized in that** the update packet is adapted (105) such that it comprises only groups of control commands which are specified in the update sequence.

11. The method according to any of the preceding claims, **characterized in that** the control commands supply a firmware.

12. The method according to any of the preceding claims, **characterized in that** the security element is supplied as a Universal Integrated Circuit Card UICC or an embedded Universal Integrated Circuit Card eUICC.

13. An update packet for employment in a method according to any of the preceding claims.

14. A system arrangement for efficiently and incrementally distributing multi-stage update packets to a security element of a mobile end device, comprising:
- a data memory devised for supplying (100) the update packet, wherein the update packet comprises several successive groups of control commands, **characterized in that**
- a control unit devised for assigning (101) an identifier to each of the groups of control commands and a specifying (102) of an update sequence of the groups of control commands based on the assigned identifier; and
- an update unit devised for iteratively transmitting (103) the update packet to the security element by the mobile end device, wherein in each iteration it is provided that at least one group of control commands is installed (104) on the security element in dependence on the predetermined update sequence and the update packet is adapted (105) so that the installed group of control commands is no longer contained in the update packet.

15. A computer program product having control commands which execute the method according to any of claims 1 to 12 when they are executed on the system arrangement of claim 14.

## Revendications

1. Procédé de répartition efficiente et incrémentielle de packages de mise à jour en plusieurs étapes à un élément de sécurité d'un terminal mobile, comprenant :
- une mise à disposition (100), par le terminal mobile, du package de mise à jour, cependant que le package de mise à jour comprend plusieurs groupes d'instructions de commande s'appuyant les uns sur les autres, **caractérisé en ce que**
- une affectation (101) d'un identificateur à chacun des groupes d'instructions de commande et une prescription (102) d'un ordre de mise à jour des groupes d'instructions de commande à l'aide de l'identificateur affecté, par l'élément de sécurité ; et
- une transmission itérative (103) du package de mise à jour à l'élément de sécurité par le terminal mobile, cependant que, dans chaque itération, au moins un groupe d'instructions de commande est installé (104) sur l'élément de sécurité en fonction de l'ordre de mise à jour prédéterminé et le package de mise à jour est adapté (105) de telle façon que le groupe d'instructions de commande installé n'est plus contenu dans le package de mise à jour.

2. Procédé selon la revendication 1, **caractérisé en ce que** l'ordre de mise à jour spécifie au moins une liste concaténée de groupes d'instructions de commande.

3. Procédé selon la revendication 1 ou 2, **caractérisé en ce que** la transmission itérative (103) du package de mise à jour est exécutée jusqu'à ce que tous les groupes des instructions de commande de l'ordre de mise à jour prédéterminé (102) soient installés (104).

4. Procédé selon une des revendications précédentes, **caractérisé en ce que**, dans chaque itération, au moins un choix parmi les groupes d'instructions de commande est installé (104) sur l'élément de sécurité.

5. Procédé selon une des revendications précédentes, **caractérisé en ce que** l'ordre de mise à jour prévoit plusieurs ordres alternatifs de groupes.

6. Procédé selon une des revendications précédentes, **caractérisé en ce que** chaque groupe d'instructions de commande est installé (104) en fonction d'un espace mémoire disponible sur l'élément de sécurité.

7. Procédé selon une des revendications précédentes, **caractérisé en ce que** des groupes qui ne sont pas installés sont transférés sur le terminal mobile.

8. Procédé selon une des revendications précédentes, **caractérisé en ce que** l'ordre de mise à jour est établi dynamiquement en fonction d'une information de compatibilité mémorisée.

9. Procédé selon une des revendications précédentes, **caractérisé en ce que** le package de mise à jour est adapté (105) de telle façon que le groupe d'instructions de commande installé (104) n'est plus contenu dans le package de mise à jour.

10. Procédé selon une des revendications précédentes, **caractérisé en ce que** le package de mise à jour est adapté (105) de telle façon que ce dernier ne comprend que des groupes d'instructions de commande spécifiés dans l'ordre de mise à jour.

11. Procédé selon une des revendications précédentes, **caractérisé en ce que** les instructions de commande mettent à disposition un firmware.

12. Procédé selon une des revendications précédentes, **caractérisé en ce que** l'élément de sécurité est mis à disposition sous forme d'une Universal Integrated Circuit Card UICC ou d'une Universal Integrated Circuit Card eUICC intégrée.

13. Package de mise à jour destiné à l'utilisation dans un procédé selon une des revendications précédentes.

14. Agencement de système destiné à la répartition efficiente et incrémentielle de packages de mise à jour en plusieurs étapes à un élément de sécurité d'un terminal mobile, comprenant :
- une mémoire de données conçue pour la mise à disposition (100) du package de mise à jour, cependant que le package de mise à jour comprend plusieurs groupes d'instructions de commande s'appuyant les uns sur les autres, **caractérisé en ce que**
- une unité de commande est conçue pour l'affectation (101) d'un identificateur à chacun des groupes d'instructions de commande et une prescription (102) d'un ordre de mise à jour des groupes d'instructions de commande à l'aide de l'identificateur affecté ; et
- une unité de mise à jour conçue pour la transmission itérative (103) du package de mise à jour à l'élément de sécurité par le terminal mobile, cependant que, dans chaque itération, au moins un groupe d'instructions de commande est installé (104) sur l'élément de sécurité en fonction de l'ordre de mise à jour prédéterminé et le package de mise à jour est adapté (105) de telle façon que le groupe d'instructions de commande installé n'est plus contenu dans le package de mise à jour.

15. Produit programme d'ordinateur ayant des instructions de commande qui exécutent le procédé selon une des revendications de 1 à 12 quand elles sont amenées à exécution sur l'agencement de système de la revendication 14.
